(19) Europäisches Patentamt
European Patent Office
Office européen des brevets

(11) EP 4 624 519 A1

(12) **EUROPEAN PATENT APPLICATION**
published in accordance with Art. 153(4) EPC

(43) Date of publication:
**01.10.2025 Bulletin 2025/40**

(21) Application number: **23894549.7**

(22) Date of filing: **20.11.2023**

(51) International Patent Classification (IPC):
***C08J 11/04*** *(2006.01)*

(52) Cooperative Patent Classification (CPC):
**C08J 11/04;** Y02W 30/62

(86) International application number:
**PCT/JP2023/041608**

(87) International publication number:
**WO 2024/111541 (30.05.2024 Gazette 2024/22)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **25.11.2022 JP 2022188275**

(71) Applicant: **MITSUBISHI GAS CHEMICAL COMPANY, INC.**
**Chiyoda-ku**
**Tokyo 100-8324 (JP)**

(72) Inventors:
- **FUJII, Takashi**
  **Tokyo 100-8324 (JP)**
- **SHIMIZU, Hidetaka**
  **Tokyo 100-8324 (JP)**
- **ITO, Maki**
  **Tokyo 100-8324 (JP)**

(74) Representative: **Hoffmann Eitle**
**Patent- und Rechtsanwälte PartmbB**
**Arabellastraße 30**
**81925 München (DE)**

# (54) METHOD FOR PRODUCING RECLAIMED POLYCARBONATE RESIN

(57) The present invention can provide a method for producing a reclaimed polycarbonate resin from a waste resin composition at least containing a polycarbonate resin, the method including a step in which the waste resin composition is dissolved in an organic solvent and the solution is filtered to prepare a 1-30 mass% resin solution and a step in which the obtained resin solution is passed through a column chromatograph to fractionate a reclaimed polycarbonate resin.

EP 4 624 519 A1

## Description

### TECHNICAL FIELD

The present invention relates to a recycling technology for polycarbonate resins, and particularly relates to a method for continuously producing a high-quality reclaimed polycarbonate resin from a resin product (molded body, etc.) containing a waste polycarbonate resin.

### BACKGROUND ART

In recent years, working on reduction in the amounts of wastes by promoting the 3Rs (Reduce, Reuse, Recycle) and appropriate disposal of wastes in compliance with the laws has become an important problem for companies.
Regarding recycling of polycarbonate resins, many patent applications of technologies including a technology for performing decomposition for recovery as bisphenol A have been filed intermittently since around 2000 (Patent Documents 1 to 3).
Patent Document 1 discloses a method in which an organic solvent solution of a polycarbonate resin is mixed with an aqueous solution of a chelating agent, the obtained mixture is stirred, then an organic solvent solution phase is separated, and the polycarbonate resin is recovered from the organic solvent solution phase. However, according to this method, it is impossible to separate impurities dissolved in the organic solvent, and in addition, it is impossible to perform separation into polycarbonate resins having different viscosity average molecular weights.
Patent Document 2 discloses a chemical recycling method for polycarbonate resins, and Patent Document 3 discloses a method for producing a bisphenol by utilizing the decomposition of a polycarbonate resin. However, it cannot be necessarily said that the methods of Patent Documents 2 and 3 are environmentally friendly since these methods require long steps and high energy consumption.
Furthermore, for commercialization, the quality of recycled products is required to be equal to or higher than the quality of original products, and further technological innovation has been demanded.

### PRIOR ART DOCUMENTS

### PATENT DOCUMENTS

Patent Document 1: Japanese Laid-Open Patent Publication No. 2001-261812
Patent Document 2: Japanese Laid-Open Patent Publication No. 2003-171324
Patent Document 3: WO2022/092176

### SUMMARY OF THE INVENTION

### PROBLEMS TO BE SOLVED BY THE INVENTION

The present invention addresses the problem of solving at least one of the above-described conventional problems. The present invention further addresses the problem of obtaining a high-quality reclaimed polycarbonate resin from a resin product (molded body, etc.) containing a waste polycarbonate resin continuously without high energy consumption by a simple method.

### MEANS FOR SOLVING THE PROBLEMS

The present inventors diligently made researches in order to solve the conventional problems and found that, by passing a specific resin solution through a column chromatograph, a high-quality reclaimed polycarbonate resin can be fractionated continuously without high energy consumption by a simple method, and thus the present invention was achieved.
Specifically, the present invention includes aspects described below.

<1> A method for producing a reclaimed polycarbonate resin from a waste resin composition containing at least a polycarbonate resin, the method including:

a step of dissolving the waste resin composition in an organic solvent and performing filtration to prepare a 1 to

30% by mass resin solution; and
a step of passing the obtained resin solution through a column chromatograph to fractionate a reclaimed polycarbonate resin.

<2> The method according to item <1>, wherein the column chromatograph is a simulated moving bed chromatograph.
<3> The method according to item <1> or <2>, wherein the organic solvent is methylene chloride.
<4> The method according to any one of items <1> to <3>, wherein two or more reclaimed polycarbonate resins having different viscosity average molecular weights (Mv) are fractionated from the waste resin composition.
<5> The method according to item <4>, wherein when the viscosity average molecular weights (Mv) of the two or more reclaimed polycarbonate resins are $Mv_1$, $Mv_2$, $Mv_3$, ...... $Mv_n$, and $Mv_{n+1}$, the resolution ($Mv_n/Mv_{n+1}$) is 2.0 or less.
<6> The method according to any one of items <1> to <5>, wherein the reclaimed polycarbonate is a bisphenol A-type polycarbonate resin.
<7> A molded body comprising a reclaimed polycarbonate resin obtained by the method according to any one of items <1> to <6>.

## ADVANTAGEOUS EFFECT OF THE INVENTION

According to the present invention, by using a column chromatograph (preferably a simulated moving bed chromatograph), a high-quality reclaimed polycarbonate resin can be obtained from a resin product (molded body, etc.) containing a waste polycarbonate resin continuously without high energy consumption by a simple method. Further, according to a preferred aspect of the present invention, reclaimed polycarbonate resins having different viscosity average molecular weights can be obtained from a waste polycarbonate resin by means of separation (fractionation/collection).

## EMBODIMENTS FOR CARRYING OUT THE INVENTION

Hereinafter, the present invention will be described in detail by way of working examples, etc., but the present invention is not limited thereto and can be arbitrarily changed and then practiced within a range not departing from the gist of the present invention.

One embodiment of the present invention is a method for producing a reclaimed polycarbonate resin from a waste resin composition containing at least a polycarbonate resin, the method including: a step of dissolving the waste resin composition in an organic solvent and performing filtration to prepare a 1 to 30% by mass resin solution; and a step of passing the obtained resin solution through a column chromatograph to fractionate a reclaimed polycarbonate resin.

In the waste resin composition, at least a polycarbonate resin is contained, and other than that, for example, a polyarylate resin, an acrylic resin, a polyester resin, a polyestercarbonate resin, a polyethylene terephthalate resin, various rubbers, various elastomer resins, an ABS resin, a polyolefin resin, a polybutylene terephthalate resin, monomers thereof, etc. may also be contained. In this case, according to the present invention, when a reclaimed polycarbonate resin is produced, resins other than the polycarbonate resin and monomers such as those described above can be produced (fractionated) at the same time.

In the present invention, examples of the organic solvent for dissolving the waste resin composition include methylene chloride, tetrahydrofuran, methyl ethyl ketone, acetone, methanol, ethanol, and toluene, and it is preferred that methylene chloride is included. These organic solvents may be used solely, or two or more of them may be used in combination.

In the present invention, filtration is performed for the purpose of, for example, removing components in the waste resin composition that do not dissolve in the organic solvent, and filtration is preferably performed using a paper filter, a membrane filter (screen filter), a metal filter that is a filter made of a metal in which a metal nonwoven fabric or wire mesh is used as a filter material, any of polymer filters (leaf disk type, pleated type, candle type, pack disk type, cylindrical type, etc.), or the like, and filtration is more preferably performed using a leaf disk type polymer filter that has a large effective filtration area. The mesh of the polymer filter is preferably 500 $\mu$m or less, more preferably 100 $\mu$m or less, and particularly preferably 30 $\mu$m or less.

In the present invention, the concentration of the resin solution obtained after the above-described filtration is 1 to 30% by mass, preferably 5 to 20% by mass, and more preferably 10 to 20% by mass.

When the concentration of the resin solution is less than 1% by mass, the productivity of the polycarbonate resin is deteriorated, and when the concentration is more than 30% by mass, the viscosity of the resin solution increases rapidly, and problems such as an increase in the internal pressure of a column chromatograph and resin precipitation tend to occur. Further, the separation ability is deteriorated.

When only the filtration process is considered, a resin solution having a lower concentration is advantageous because it is easier to perform filtration, while a resin solution having a higher concentration is disadvantageous because it

is more difficult to perform filtration. The optimum concentration can be determined by balancing with productivity and decrease of the amount of a solvent used as much as possible.

In the present invention, the obtained resin solution is passed through a column chromatograph to fractionate a reclaimed polycarbonate resin. As the column chromatograph, a fixed bed chromatograph, a moving bed chromatograph, a multicomponent separation and circulation type chromatograph, a simulated moving bed chromatograph (also known as a reverse phase chromatograph) or the like can be used, and a simulated moving bed chromatograph is preferably used from the viewpoint of good separation ability, the possibility of increasing in size, and the system in which a solvent is easily recovered and recycled.

The simulated moving bed chromatograph preferably used in the present invention is not particularly limited, but it is preferred to use the simulated moving bed chromatograph described in Japanese Laid-Open Patent Publication No. H11-228455.

In a preferred embodiment of the present invention, two or more reclaimed polycarbonate resins having different viscosity average molecular weights (Mv) can be fractionated from the waste resin composition.

In the present invention, as the method for measuring the viscosity average molecular weight (Mv), the method described in the Examples below can be used.

In a preferred embodiment of the present invention, when the viscosity average molecular weights (Mv) of the two or more reclaimed polycarbonate resins are $Mv_1$, $Mv_2$, $Mv_3$, ...... $Mv_n$, and $Mv_{n+1}$, the resolution ($Mv_n/Mv_{n+1}$) is preferably 2.0 or less, more preferably 1.1 to 1.6, even more preferably 1.1 to 1.5, and particularly preferably 1.2 to 1.4. When the resolution ($Mv_n/Mv_{n+1}$) exceeds 2.0, separation is insufficient, and the quality of a polycarbonate obtained may be reduced.

According to the present invention, any type of polycarbonate resin can be reclaimed, but the reclaimed polycarbonate is preferably a bisphenol A-type polycarbonate resin, since it has a relatively stable structure, it is technically easily separated, it is a type that is excreted in large quantities in the world, and reclaiming thereof is very important.

The reclaimed polycarbonate resin thus obtained is preferably used for the production of molded bodies.

Further, the present invention can also be applied to a polycarbonate resin obtained from a diol represented by general formula (2-1) or (2-2) below.

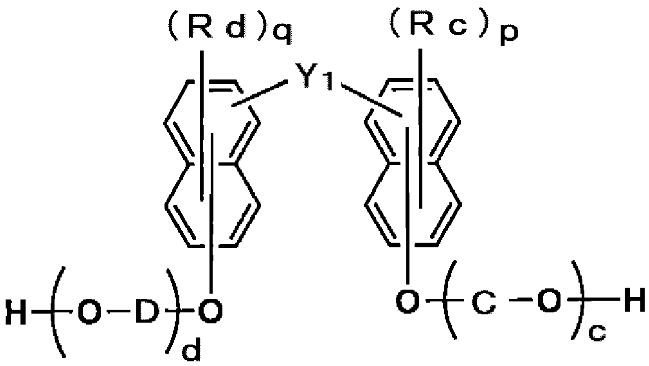

(2 − 1)

(In general formula (2-1):

$R_c$ and $R_d$ are each independently selected from the group consisting of a hydrogen atom; a halogen atom; a substituted or unsubstituted alkyl group having 1 to 20 carbon atoms; a substituted or unsubstituted alkoxyl group having 1 to 20 carbon atoms; a substituted or unsubstituted cycloalkyl group having 5 to 20 carbon atoms; a substituted or unsubstituted cycloalkoxyl group having 5 to 20 carbon atoms; a substituted or unsubstituted aryl group having 6 to 20 carbon atoms; a substituted or unsubstituted heteroaryl group having 6 to 20 carbon atoms which contains at least one heterocyclic atom selected from O, N and S; a substituted or unsubstituted aryloxy group having 6 to 20 carbon atoms; and $-C{\equiv}C-R_{h3}$;

$R_{h3}$ represents a substituted or unsubstituted aryl group having 6 to 20 carbon atoms, or a substituted or unsubstituted heteroaryl group having 6 to 20 carbon atoms which contains at least one heterocyclic atom selected from O, N and S;

$Y_1$ represents a single bond or a substituted or unsubstituted fluorene group;

C and D each independently represent a substituted or unsubstituted alkylene group having 1 to 5 carbon atoms;

p and q each independently represent an integer of 0 to 6; and

c and d each independently represent an integer of 0 to 10.)

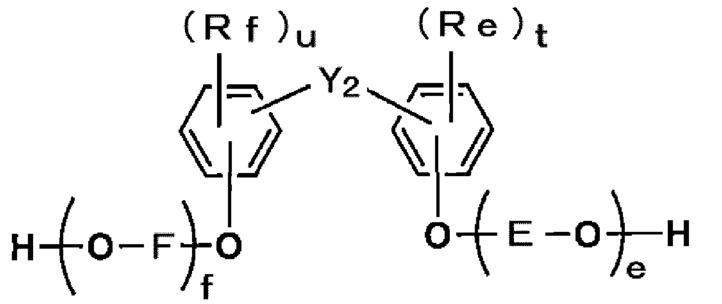

(2－2)

(In general formula (2-2):

$R_e$ and $R_f$ are each independently selected from the group consisting of a hydrogen atom, a halogen atom, a substituted or unsubstituted alkyl group having 1 to 20 carbon atoms, a substituted or unsubstituted alkoxyl group having 1 to 20 carbon atoms, a substituted or unsubstituted cycloalkyl group having 5 to 20 carbon atoms, a substituted or unsubstituted cycloalkoxyl group having 5 to 20 carbon atoms, and a substituted or unsubstituted aryl group having 6 to 20 carbon atoms;
$Y_2$ represents a single bond, a substituted or unsubstituted fluorene group, or any one of structural formulae represented by formulae (8) to (15):

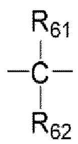
(8)

$-S-$
(9)

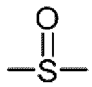
(10)

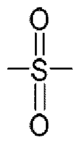
(11)

$-(CH_2)_r-$
(12)

$-O-$
(13)

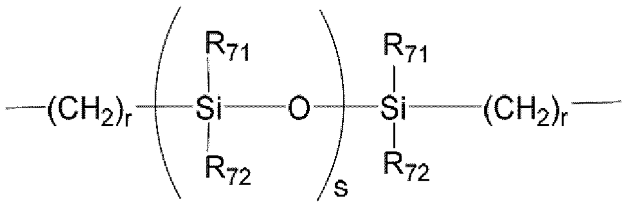
(14)

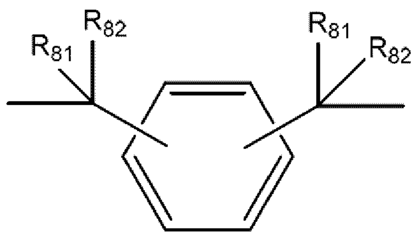
(15)

(wherein in formulae (8) to (15):

$R_{61}$, $R_{62}$, $R_{71}$, $R_{72}$, $R_{81}$ and $R_{82}$ each independently represent a hydrogen atom, a halogen atom, a substituted or unsubstituted alkyl group having 1 to 20 carbon atoms, or a substituted or unsubstituted aryl group having 6 to 30 carbon atoms, or represent a substituted or unsubstituted carbocyclic ring or heterocyclic ring having 1 to 20 carbon atoms, wherein $R_{61}$ and $R_{62}$, or $R_{71}$ and $R_{72}$, are bonded to each other, and
r and s each independently represent an integer of 0 to 5000);
E and F each independently represent a substituted or unsubstituted alkylene group having 1 to 5 carbon atoms;

t and u each independently represent an integer of 0 to 4; and
e and f each independently represent an integer of 0 to 10.)

EXAMPLES

Hereinafter, the present invention will be described in detail by way of a working example, but the present invention is not limited thereto.

<Viscosity Average Molecular Weight (Mv)>

Measurement apparatus: Ubbelohde capillary viscometer
Solvent: dichloromethane
Concentration of resin solution: 0.5 gram/deciliter
Measurement temperature: 25°C

The measurement was carried out under the above-described conditions to determine a limiting viscosity [η] deciliter/gram with a Huggins constant of 0.45, and calculation was made according to formula below.

$$\eta = 1.23 \times 10^{-4} \times Mv^{0.83}$$

(Example 1)

A plastic molded article containing a polycarbonate resin was dissolved in methylene chloride, and the mixture was filtered using a 20-μm mesh leaf disk type polymer filter to prepare a 15% by mass resin solution. The obtained resin solution was passed through a simulated moving bed chromatograph. A cycle, in which flow channel switching was performed intermittently 12 times by controlling opening and closing of an electromagnetic valve using a sequencer, was performed to carry out fractionation repeatedly.

Details of the simulated moving bed chromatograph are as described below.

Apparatus: It was based on the simulated moving bed chromatograph described in Japanese Laid-Open Patent Publication No. H11-228455.
Column: stainless steel column (with heating jacket)
inner diameter: 1.2 cm, length: 60 cm, 12 columns, connected in series, filled with porous gel
Temperature: 60°C
Time for one cycle: 250 minutes
Supply flow rate: total 10.2 ml/min

Supply flow rate of resin solution: 1.0 ml/min
Supply flow rate of eluent: methylene chloride, 9.2 ml/min

Discharge flow rate: total 10.2 ml/min

Weakly adsorbent fractionated component: 2.8 ml/min
Medium-level adsorbent fractionated component: 3.4 ml/min
Strongly adsorbent fractionated component: 4.0 ml/min

Methylene chloride was evaporated from solutions collected from each of the adsorbent fractionated components 400 to 450 minutes after the start of the fractionation operation to obtain polycarbonate resins. The viscosity average molecular weights (Mv) of the obtained resins were as described below.

Weakly adsorbent fractionated component: 28,000
Medium-level adsorbent fractionated component: 21,500
Strongly adsorbent fractionated component: 16,000

The resolutions ($Mv_n/Mv_{n+1}$) were 1.30 (Mv of weakly adsorbent fractionated component/Mv of medium-level

adsorbent fractionated component) and 1.34 (Mv of medium-level adsorbent fractionated component/Mv of strongly adsorbent fractionated component).

## Claims

**1.** A method for producing a reclaimed polycarbonate resin from a waste resin composition containing at least a polycarbonate resin, the method comprising:

dissolving the waste resin composition in an organic solvent and performing filtration to prepare a 1 to 30% by mass resin solution; and

passing the obtained resin solution through a column chromatograph to fractionate a reclaimed polycarbonate resin.

**2.** The method according to claim 1, wherein the column chromatograph is a simulated moving bed chromatograph.

**3.** The method according to claim 1 or 2, wherein the organic solvent is methylene chloride.

**4.** The method according to any one of claims 1 to 3, wherein two or more reclaimed polycarbonate resins having different viscosity average molecular weights (Mv) are fractionated from the waste resin composition.

**5.** The method according to claim 4, wherein when the viscosity average molecular weights (Mv) of the two or more reclaimed polycarbonate resins are $Mv_1$, $Mv_2$, $Mv_3$, ...... $Mv_n$, and $Mv_{n+1}$, a resolution ($Mv_n/Mv_{n+1}$) is 2.0 or less.

**6.** The method according to any one of claims 1 to 5, wherein the reclaimed polycarbonate is a bisphenol A-type polycarbonate resin.

**7.** A molded body comprising a reclaimed polycarbonate resin obtained by the method according to any one of claims 1 to 6.

## INTERNATIONAL SEARCH REPORT

International application No.
**PCT/JP2023/041608**

**A. CLASSIFICATION OF SUBJECT MATTER**

***C08J 11/04***(2006.01)i
FI: C08J11/04

According to International Patent Classification (IPC) or to both national classification and IPC

**B. FIELDS SEARCHED**

Minimum documentation searched (classification system followed by classification symbols)

C08J11/04

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X<br>Y | US 2012/0329977 A1 (BELL, Phillip) 27 December 2012 (2012-12-27)<br>paragraphs [0009], [0061]-[0068], [0101]-[0116], claims 1-14 | 1-3, 6-7<br>4-5 |
| Y | JP 2000-232878 A (HOKUREN FEDERATION OF AGRICULT COOP) 29 August 2000 (2000-08-29)<br>claims, paragraphs [0006], [0015], [0051]-[0052], [0072] | 4-5 |
| Y | CN 113527377 A (INNER MONGOLIA HONGXING BIOTECHNOLOGY CO., LTD.) 22 October 2021 (2021-10-22)<br>paragraphs [0005], [0025]-[0026], [0039] | 4-5 |
| A | JP 2000-319500 A (TEIJIN CHEM LTD) 21 November 2000 (2000-11-21)<br>entire text | 1-7 |
| A | JP 06-306200 A (ABE, Masakazu) 01 November 1994 (1994-11-01)<br>entire text | 1-7 |

☑ Further documents are listed in the continuation of Box C. ☑ See patent family annex.

* Special categories of cited documents:
"A" document defining the general state of the art which is not considered to be of particular relevance
"D" document cited by the applicant in the international application
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **29 January 2024** | **06 February 2024** |
| Name and mailing address of the ISA/JP<br>**Japan Patent Office (ISA/JP)**<br>**3-4-3 Kasumigaseki, Chiyoda-ku, Tokyo 100-8915**<br>**Japan** | Authorized officer<br><br>Telephone No. |

Form PCT/ISA/210 (second sheet) (July 2022)

**INTERNATIONAL SEARCH REPORT**

International application No.
**PCT/JP2023/041608**

**C. DOCUMENTS CONSIDERED TO BE RELEVANT**

| Category* | Citation of document, with indication, where appropriate, of the relevant passages | Relevant to claim No. |
|---|---|---|
| A | JP 2006-265347 A (SCIENCE JAPAN KK) 05 October 2006 (2006-10-05) entire text | 1-7 |
| A | JP 2018-187808 A (YAMAGUCHI PREFECTURAL INDUSTRIAL TECH INSTITUTE) 29 November 2018 (2018-11-29) entire text | 1-7 |
| A | JP 2004-182746 A (VICTOR CO OF JAPAN LTD) 02 July 2004 (2004-07-02) entire text | 1-7 |
| A | JP 11-152371 A (GENERAL ELECTRIC CO <GE>) 08 June 1999 (1999-06-08) entire text | 1-7 |

Form PCT/ISA/210 (second sheet) (July 2022)

**INTERNATIONAL SEARCH REPORT**
**Information on patent family members**

International application No.
**PCT/JP2023/041608**

| Patent document cited in search report | Publication date (day/month/year) | Patent family member(s) | Publication date (day/month/year) |
|---|---|---|---|
| US 2012/0329977 A1 | 27 December 2012 | WO 2012/158775 A1<br>EP 2709741 A1<br>CN 103533994 A | |
| JP 2000-232878 A | 29 August 2000 | (Family: none) | |
| CN 113527377 A | 22 October 2021 | (Family: none) | |
| JP 2000-319500 A | 21 November 2000 | (Family: none) | |
| JP 06-306200 A | 01 November 1994 | (Family: none) | |
| JP 2006-265347 A | 05 October 2006 | (Family: none) | |
| JP 2018-187808 A | 29 November 2018 | (Family: none) | |
| JP 2004-182746 A | 02 July 2004 | (Family: none) | |
| JP 11-152371 A | 08 June 1999 | AU 8189798 A<br>BR 9802294 A<br>SG 81227 A1<br>KR 10-1999-0029426 A | |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2001261812 A
- JP 2003171324 A
- WO 2022092176 A
- JP H11228455 A